# EUROPÄISCHE PATENTSCHRIFT

(11) **EP 1 251 290 B1**
(45) Veröffentlichungstag und Bekanntmachung des Hinweises auf die Patenterteilung: **19.04.2006**
(21) Anmeldenummer: 02007865.5
(22) Anmeldetag: 04.04.2002
(51) Int. Cl.: F16D 65/12, F16D 69/02

(54) **Reibscheibe und Verfahren zu ihrer Herstellung**
Friction disc and method for its production
Disque de friction et son procédé de fabrication

(30) Priorität: 18.04.2001 DE 10118921
(43) Veröffentlichungstag der Anmeldung: 23.10.2002
(73) Patentinhaber: AUDI AG, 85045 Ingolstadt (DE)
(72) Erfinder: Gruber, Udo, 86356 Neusäss (DE); Heine, Michael, Dr., 86695 Allmannshofen (DE); Kienzle, Andreas, Dr., 86672 Thierhaupten (DE)
(74) Vertreter: Deckers, Hellmuth Alexander

(56) Entgegenhaltungen:
- DE-A- 2 308 256
- DE-A- 19 824 465
- DE-U- 29 519 929
- US-A- 6 042 935

## Beschreibung

Die Erfindung betrifft eine Reibscheibe, umfassend eine zylinderförmige Zone, die als Tragscheibe kraftschlüssig mit einer Achse zu verbinden ist, und mindestens eine mindestens eine mit einer Deckfläche der Tragscheibe verbundene zylinderförmige als Reibschicht ausgebildete Ringzone.

Aus dem Bereich der Grauguß-Bremsscheiben ist das Prinzip der Kühlung von Bremsscheiben durch eine Oberflächenvergrößerung und die Erzeugung von zwangsgeführter Umluft bekannt. Als konstruktive Maßnahmen zur Erreichung dieses Ziels werden im allgemeinen Ausnehmungen oder Bohrungen senkrecht zur Reibfläche vorgesehen, wie zum Beispiel in der US-A 3,809,192, oder es werden innenbelüftete Scheiben hergestellt. Das Prinzip der innenbelüfteten Bremsscheibe wird unter anderem in der DE-A 25 07 264 dadurch beschrieben, daß zwei parallel ausgerichtete Bremsringscheiben durch Querrippen verbunden werden. Hierdurch werden im Inneren der Bremsscheibe verlaufende radial ausgerichtete Kanäle gebildet. In der DE-A 25 07 264 wird ebenfalls die Verbindung des Prinzips der innenliegenden Lüftungskanäle und der Ausnehmungen oder Bohrungen kombiniert.

Ziel dieser konstruktiven Maßnahmen ist es, ein günstiges Abkühlverhalten durch Innenkühlung der Bremsscheibe zu erreichen, so daß Stahl- oder Graugußscheiben beim Bremsen keine übermäßige Erwärmung erleiden, die zur Verschlechterung des Ansprechverhaltens und des Reibwertes führen würde. Unter Höchstbelastung kann es dennoch schnell zu einer Überhitzung des Materials und zu Schädigungen kommen.

Eine wesentliche Verbesserung der Bremsleistung wird mit Bremsscheiben aus CFC (mit Kohlenstoff-Fasern verstärkter Kohlenstoff) erreicht. Dieser Werkstoff hat sich beispielsweise für Hochleistungsbremsen im Flugzeugbau bewährt. Als großer Nachteil wirkt sich hier aber die geringe Oxidationsbeständigkeit des Kohlenstoffs aus, durch die es bei Nutzung unter Luftzutritt zu erheblichem Verschleiß kommt. Eine gewisse Verbesserung dieses problematischen Verhaltens kann durch eine Oberflächenversiegelung mit Schutzschichten erreicht werden. Das Prinzip der Innenbelüftung wurde auch auf Faserverbundwerkstoffe aus der Gruppe der Kohlenstoffe übertragen, wie in der DE-A 198 16 381 beschrieben. Für den Dauereinsatz in Straßenfahrzeugen haben sich aber auch diese Bremssysteme als nicht geeignet erwiesen.

Eine wesentliche Verbesserung der für Bremsenanwendungen relevanten Eigenschaften hat sich durch die Verwendung von kurzfaserverstärkten Verbundwerkstoffen aus C/SiC ergeben. Unter "C/SiC" wird hier ein Verbundwerkstoffverstanden, dessen Matrix im Wesentlichen aus Siliciumcarbid, Silicium und Kohlenstoff besteht, und der durch Kohlenstoff-Fasern verstärkt ist. Derartige Werkstoffe werden u. a in der DE-C 44 38 455 beschrieben; sie werden durch Infiltration von porösen kohlenstoffaserverstärkten Kohlenstoffen mit flüssigem Silicium und einer anschließenden Wärmebehandlung hergestellt, wobei zumindest teilweise das Silicium mit Kohlenstoff unter Bildung von Siliciumcarbid reagiert.

Aus dem US-Patent 6,042,935 ist ein Reibelement bekannt, das einen Kemkörper und einen Reibkörper umfaßt, wobei der mit dem Reibkörper durch eine Verbindungsschicht mit einem Siliciumcarbid-Gehalt von mindestens 50 % verbundene Kernkörper Belüftungskanäle aufweisen kann. In der Offenlegungsschrift DE 23 08 256 werden metallische Bremsscheiben mit Rillen in der Oberfläche beschrieben, wobei diese Rillen eine zügige Wärmeabfuhr und bessere Bremsleistungen bei Nässe bewirken. Keramische Bremsscheiben werden nicht erwähnt.

Aus der DE-A 197 10 105 sind Herstellungsverfahren und Bremsenanwendung von C/SiC bekannt. Aufgrund der hohen und vergleichsweise wenig temperaturabhängigen Reibwerte, des guten Ansprechverhaltens und der außerordentlich guten Verschleißbeständigkeit ist diese Werkstoffklasse außerordentlich gut für Bremsenanwendungen geeignet.

Innenbelüftete Bremsscheiben sind auch mit diesem Werkstoff realisiert worden, eine Möglichkeit zur konstruktiven Umsetzung wird in DE-A 199 25 003 ausgeführt. Hieraus geht hervor, daß die Lüftungskanäle im Inneren der Bremsscheibe insbesondere durch das Fügen von zwei strukturierten Halbschalen mit kanalartigen Ausnehmungen gebildet werden. Nachteilig ist, daß das Fügen und Kleben von CFC-Halbzeugen ein kostenintensiver Arbeitsschritt ist, und durch die Klebe- oder Fügeschicht eine mechanische Schwächung des Gesamtverbundes resultieren kann. Besonders nachteilig ist die gegenüber der massiven Bauweise starke mechanische Schwächung der Bremsscheibe, welche aus den Hohlräumen resultiert. Diese Schwächung ist zudem noch im krafttragenden Bereich der Bremsscheibe, der Tragzone.

Ein weiteres Problem entsteht dadurch, daß C/SiC bei extrem erhöhten Temperaturen, wie sie unter extremer Bremsbelastung auftreten können, eine oxydative Schädigung erfährt, welche durch den Abbrand der C-Fasern von der Oberfläche her eingeleitet wird. Nachteilig bei allen innenbelüfteten Ausführungen ist, daß diese Schädigung wegen der Sauerstoffzufuhr mittels der Lüftungskanäle bevorzugt in die krafttragende Tragzone eingetragen wird.

Eine weitere konstruktive Lösung zur Nutzung von C/SiC als Reibmaterial wird in der DE-A 197 21 647 beschrieben. Die darin beschriebene Reibeinheit besteht aus in eine Bremsscheibe als Halterungsteil integrierten Reibkörpern, die über die Oberfläche des Halterungsteils herausragen. Sowohl Halterungskörper als auch Reibkörper sind aus Kohlenstoff und/oder Siliciumcarbid enthaltendem Werkstoff ausgeführt. Die Wärmeabfuhr von den Reibflächen der einzelnen überstehenden Reibkörper soll dadurch erreicht werden, daß die überstehenden Reibkörperstifte von Luft angeströmt werden können und die Faserorientierung der stark anisotrop wärmeleitenden Fasern senkrecht zur langen Achse des Tragkörpers die Wärmeableitung verbessert. Sehr nachteilig ist hier die aufwendige Herstellungstechnik, bei welcher die zahlreichen Reibkörper separat hergestellt, in das Halterungsteil eingebracht und verbunden werden müssen. Darüber hinaus ist ein gleichmäßiges und verschleißarmes Gleiten des Bremsbelages über die überstehenden Stifte nur schwer zu realisieren.

Aus diesem Stand der Technik ergibt sich die Aufgabe, eine Reibscheibe aus einem faserverstärkten keramischen Verbundwerkstoff, insbesondere eine C/SiC-Bremsscheibe, mit ungeschmälertem Lastaufnahmevermögen zu schaffen, was unter anderem bedeutet, daß auf Kanäle und Ausnehmungen zur Kühlung innerhalb der mechanisch belasteten Tragzone möglichst verzichtet werden soll. Des weiteren soll die Scheibe vorzugsweise aus einem Teil gefertigt werden, insbesondere soll auf eine den Verbund schwächende Klebung innerhalb der Tragzone und eine mechanische Bearbeitung zur Erzeugung der Außenbelüftung verzichtet werden.

Die vorstehende Aufgabe wird durch eine Reibscheibe umfassend eine zylinderförmige Zone A, die als Tragscheibe kraftschlüssig mit einer Achse zu verbinden ist, und mindestens eine mit einer Deckfläche der Tragscheibe verbundene zylinderförmige als Reibschicht ausgebildete Ringzone B in der Weise gelöst, daß die Ringzone B auf der der Tragscheibe A abgewandten Seite radial-trapezförmige und/oder evolventenförmig gekrümmte und/oder ellipsenförmige und/oder kreisförmige und/oder polygonale zum Umfang und/oder zum Zentrum hin offene und/oder geschlossene Ausnehmungen aufweist, und wobei das Material der Tragscheibe A eine faserverstärkte Keramik ist, daß sie aus einem Teil im Grünzustand vor der Keramisierung geformt ist, und wobei das Material der Ringzone B ein keramisches Material ist, das gegebenenfalls faserverstärkt ist, und das keramische Material der Ringzone B und das Material der Matrix der faserverstärkten Keramik der Tragscheibe A unabhängig voneinander ausgewählt sind aus Silicium, Siliciumcarbid, Siliciumnitrid, Kohlenstoff, Bomitrid, Borcarbid, Si/B/N/C und deren Mischungen.

Durch die Erfindung wird ein Kühlsystem geschaffen in Form außenliegender, in der Reibschicht bzw. in der Reibzone angeordneter Kühlkanäle, Bohrungen und/oder Ausnehmungen in einer Art, daß die Bremsenergie von der Oberfläche, teils durch Zwangsumluftkühlung an die Außenluft und teils durch Wärmeleitung in die Tragscheibe abgeführt wird, und die Tragscheibe in Massivbauweise ohne innenliegende Kanäle oder Aussparungen ausgeführt ist. Ein weiterer Vorteil ist, daß diese Reibscheibe in einem kostengünstigen Fertigungsverfahren hergestellt werden kann, dessen Kostensenkungseffekt insbesondere darauf beruht, daß auf das Kleben und Fügen mehrerer (CFC-) Halbzeuge verzichtet wird, da die Reibscheibe aus Tragscheibe und Reibzone besonders bevorzugt aus einem Teil gefertigt wird und die Kanalstruktur während der Grünkörperherstellung erzeugt wird.

Unter SiB/N/C werden hier keramische Mischphasen aus mindestens zwei Phasen verstanden, wobei die Materialien der einzelnen Phasen aus den Elementen Silicium, Bor und Kohlenstoff sowie binären, ternären und quaternären Verbindungen der genannten Elemente Silicium, Bor, Stickstoff und Kohlenstoff ausgewählt sind,

Ein weiteres vorteilhaftes Merkmal dieser konstruktiven Ausgestaltung ist, daß das Kernmaterial der Tragscheibe A als Wärmespeicher bzw. -puffer wirken kann. Im Gegensatz zur Innenkühlung ist der Kern massiv aufgebaut und besitzt daher eine höhere Wärmekapazität.

Ein weiterer Vorteil der Erfindung ist die schnelle Kühlung der Oberfläche der Ringzone B, deren außenliegende Oberfläche im Kontakt mit Bremsbelägen als Reibfläche wirkt, und die dadurch geringere Wärmebelastung der peripheren Bauteile im Vergleich zur Innenkühlung. Ist die Ringzone B im direkten Kontakt mit den Bremsbelägen in einer Bremskonstruktion, so wird sie der Einfachheit nachfolgend auch als.Reibschicht oder Reibzone bezeichnet.

Ein weiterer wesentlicher Vorteil der Erfindung ist, daß durch den Verzicht auf innenliegende Lüftungskanäle die Heißzone im Zentrum der Tragscheibe vor Luftzutritt geschützt wird. Dadurch kann der Abbrand von kohlenstoffhaltigen oder C-Fasern bei durch Überbelastung hervorgerufener Überhitzung der Scheibe nur an der Oberfläche der Reibzone stattfinden, so daß eine Schwächung der lasttragenden Tragscheibe weitgehend vermieden wird.

Darüber hinaus kann die erfindungsgemäße Zusammensetzung der Reibzone einen geringeren Gehalt an C-Fasern als die Tragzone aufweisen. Hierdurch wird eine größere Toleranz gegenüber oxydativer Schädigung erreicht. Die gleichzeitige Erreichung dieser höheren Toleranz mit guten Reibeigenschaften wird erfindungsgemäß durch einen höheren SiC-Gehalt und eine Verringerung des C-Faser-Volumenanteils der Reibzone erreicht.

Überraschenderweise werden die Bremseigenschaften und die mechanische Festigkeit einer Bremsscheibe aus C/SiC im Vergleich zur Bremsscheibe aus Grauguß oder Stahl durch die anwendungsbedingte Temperaturerhöhung beim Bremsen nicht verschlechtert, sondern im Gegensatz dazu sogar teilweise deutlich verbessert. Dies äußert sich insbesondere in den mechanischen Eigenschaften in der Tragzone. Die Festigkeit des C/SiC-Werkstoffes nimmt nämlich mit der Erhöhung der Temperatur nicht ab, wie bei Grauguß, sondern sie nimmt zu. Die Biegefestigkeit bei 1200 °C kann im Vergleich zu der bei Raumtemperatur um nahezu 100 % ansteigen. Der Biege-Elastizitätsmodul steigt ebenfalls mit zunehmender Temperatur, wobei zunächst im unteren Temperaturbereich ein Tal durchschritten wird. Es ist daher günstig, die Temperatur der mechanisch beanspruchten lasttragenden Teile zu erhöhen. Die erfindungsgemäße Außenbelüftung erzeugt einen Wärmegradienten zur zentralen Tragscheibe hin. Dies untermauert die Vorteilhaftigkeit der erfindungsgemäßen Konstruktion der Außenbelüftung.

Bevorzugt ist die Reibscheibe aus einem C/SiC-Verbundwerkstoff aufgebaut. Dabei kann der Gesamtverbund der Reibscheibe aus verschiedenen C/SiC-Materialzusammensetzungen aufgebaut sein, so daß sich für Reib- und Tragzone unterschiedliche Materialeigenschaften ergeben können.

Die Ringzone B ist derjenige Teil der Reibscheibe, der die Kanäle, Aussparungen und/oder Vertiefungen enthält, wobei die Dicke dieser Ringzone oder Reibschicht über die Tiefe dieser genannten Ausnehmungen definiert ist als der maximale Wert der Tiefe einer der Ausnehmungen in der betreffenden Fläche. Im Falle von zusätzlichen Bohrungen oder Aussparungen, die durch die gesamte Scheibe reichen, ist.deren Tiefe naturgemäß nicht bei der Bestimmung der Dicke der Reibschicht mit zu berücksichtigen.

Das Herstellungsverfahren für die erfindungsgemäßen Reibscheiben gliedert sich in die endformnahe Herstellung eines porösen kohlenstoffhaltigen Faserverbundwerkstoffes, vorzugsweise CFC, insbesondere über einen Preßvorgang und der darauffolgenden Infiltration und Umsetzung mit flüssigem Silicium, wobei insbesondere der Kohlenstoff in der Matrix des Faserverbundwerkstoffes zumindest zum Teil zu Siliciumcarbid umgesetzt wird, wie es zum Beispiel in der DE-A 197 10 105 beschrieben ist.

Als verstärkendes Fasermaterial sind alle hochtemperaturfesten Fasern insbesondere aus keramischen Rohstoffen denkbar, wobei kohlenstoffhaltige Fasern, insbesondere Kohlenstoff-, Graphit-, SiC- und SiBNC-Fasern bevorzugt sind. Werden die aufgeführten kohlenstoffhaltigen Fasern verwendet, so wird die durch die Flüssigsilicierung (Infiltration des porösen Substrats mit flüssigem Silicium und anschließende Reaktion zumindest eines Bestandteils der Matrix mit Silicium) hergestellte Verbundkeramik im folgenden als C/SiC bezeichnet.

Zur Herstellung des endformnahen porösen kohlenstoffhaltigen Faserverbund- oder CFC-Körpers werden zunächst Preßmassen aus Fasern, Faserbündeln, Pech und Harz hergestellt und granuliert. Vorzugsweise werden Fasern oder Faserbündel eingesetzt, die eine überwiegend aus Kohlenstoff bestehende Schutzschicht besitzen, welche durch ein- oder mehrmalige Beschichtung mit Harz oder Pech und folgender Pyrolyse erzeugt wird. Ebenso können aber auch Fasern eingesetzt werden, die Pyrokohlenstoff-Schichten aufweisen.. Als weitere Komponenten können in die Mischung auch pulverförmige Zuschlagstoffe, wie Kohle-, Graphit-, Siliciumcarbid- oder Silicium-Pulver aufgenommen werden.

Die Zusammensetzung der Massen kann hinsichtlich der Faserlängen, der Faserlängenverteilung und der Menge der einzelnen Komponenten variiert werden, je nachdem welche Aufgabe das Material in der später gebildeten SiC/C/Si-Matrix zu erfüllen hat.

Der Fasergehalt in der Mischung wird so gewählt, daß in der keramisierten Form (der silicierten Keramik) ein Volumenanteil an Fasern von 0 bis 80 %, bevorzugt 2 bis 60 %, und besonders bevorzugt 20 bis 40 % vorliegt.

Die für die optimalen Reibeigenschaften und für die optimalen Trageigenschaften (Torsions-Elastizitätsmodul und Torsionsfestigkeit) zu wählenden Zusammensetzungen der Werkstoffe (bevorzugt der C/SiC-Verbundwerkstoffe) sind im allgemeinen voneinander verschieden. Die Unterschiede betreffen sowohl den Fasergehalt, als auch mittlere Faserlänge und Faserlängenverteilung der in der Verbundkeramik enthaltenen Fasern. Ebenso ergeben sich in Abhängigkeit der Faserbündeldicke beziehungsweise der zugrundeliegenden Filarnentzahi im Faserbündel unterschiedliche Eigenschaften.

Als Fasermaterial sind Kurzfasern und ganz besonders Kurzfaserbündel bevorzugt. Unter Kurzfasern sind Längen von 0,01 bis 80 mm, bevorzugt 0,02 bis 8 mm zu verstehen. Unter Faserbündeln sind Agglomerate von 5 bis 5000 Einzelfilamenten zu verstehen, die vornehmlich parallel ausgerichtet sind. Die Agglomerate werden durch eine kohlenstoffhaltige und/oder SiC-haltige Matrix zusammengehalten.

In der optimalen Zusammensetzung der Reibzone ist, wie bereits erwähnt typischerweise der Gehalt an Fasern geringer als in der Tragscheibe. Üblicherweise ist der Volumenanteil der Fasern im Werkstoff der Tragscheibe mindestens das 1,01-fache, bevorzugt mindestens das 1,05-fache, und besonders bevorzugt mindestens das 1,5-fache des Volumenanteils in der Reibzone.

Unterscheiden sich die Zusammensetzungen der Reib- und der Tragzone, so weist der Verbundkörper bevorzugt auch einen Gradienten bezüglich der Länge der und/oder des Gehaltes (Volumen-, oder Massenanteils im Werkstoff) an Verstärkungsfasern auf, in der Weise, daß die Faserlänge und der Massenanteil an Fasern in Richtung auf die Tragscheibe bzw. dessen Zentrum zunimmt.

Dieser Gradient kann auch durch einen Gradienten der Faserbündeldicke überlagert sein, wobei die Faserbündeldicke in Richtung von der Ringzone B zur Tragscheibe A hin zunimmt. Die Faserbündeldicke ist wie üblich definiert über das Produkt der mittleren Anzahl der Einzelfilamente in einem Bündel und den (mittleren) Titer der Einzelfilamente. Üblicherweise ist die Faserbündeldicke der Tragscheibe A mindestens 1%, bevorzugt mindestens 5%, und besonders bevorzugt mindestens 10% höher als diejenige der Ringzone B. Dieser Gradienten-Aufbau kann Diskontinuitäten aufweisen, wie sie beispielsweise durch eine Klebeschicht hervorgerufen werden können.

Je nach Anforderungsprofil und Auslegung des Bauteils ist es jedoch auch möglich, für die Trag- und Reibzone den gleichen Fasergehalt zu wählen. Ebenso ist es nicht zwingend, daß sich die Länge der Fasern in Reib- und Tragzone unterscheiden.

Die am einfachsten herstellbare Ausführung ergibt sich, wenn für Trag- und Reibzone gleiche Werkstoff-Zusammensetzung beziehungsweise gleiches Material gewählt wird. Unter Reibzone (Reibschicht) ist wieder der Außenbereich der Scheibe an Boden- bzw. Deck-Fläche von der Oberfläche bis zur Tiefe der Kanäle (bis zum Kanalboden) zu verstehen.

Die Vertiefungen, Aussparungen und Kanäle in der Reibschicht werden im Grünzustand durch geeignete Preßformen während des Preßvorgangs auf den Vorformling übertragen. Die Preßformen tragen dazu das Negativ der zu erzeugenden Formen und Vertiefungen als Erhöhung. Der gepreßte Vorformling enthält die genannten Fasern oder Faserbündel sowie die carbonisierbaren Anteile (Peche und/oder Harze), diese Art eines Werkstoffes wird üblicherweise als "CFK" bezeichnet, wenn Kohlenstoff-Fasern als Verstärkungsfasern eingesetzt sind.

Erfindungsgemäß können der Preßform beim Befüllen nacheinander verschiedene Mischungen zugeführt werden, so daß sich ein gradueller Aufbau des fertigen CFK-Körpers und dadurch eine graduelle Veränderung der Zusammensetzung und der Materialeigenschaften der fertigen C/SiC-Scheibe ergeben kann. Hierdurch können in einfacher Weise sehr unterschiedliche Werkstoffeigenschaften von Trag- und Reibzone des späteren C/SiC-Körpers eingestellt werden. Hinsichtlich eines festen Materialverbundes und einer guten Thermoschock- und Thermowechselbeständigkeit ist ein gradueller Übergang der Werkstoffeigenschaften und hier insbesondere der thermischen Ausdehnung von äußerster Wichtigkeit. Mit der beschriebenen graduellen Veränderung der Zusammensetzung werden scharfe Übergänge der Werkstoffeigenschaften vermieden.

In diesem Verfahrensschritt der Fertigung des Vorformlings ist es insbesondere auch möglich, Langfasern einzusetzen, die in Form von Bündeln, Gestricken, Filzen, Prepregs oder Matten in den Verbundkörper eingebracht werden.

In einer vorteilhaften Ausgestaltung der Erfindung werden in der Ebene der zu bildenden Tragscheibe eine oder mehrere Langfasergelege, Prepregs oder Matten eingebracht, die durch die Preßmischung voneinander getrennt sein können. Hierdurch kann eine gezielte Verstärkung des Tragscheibe in der Ebene vorgenommen werden, in welcher unter Anwendungsbedingungen die Fliehkräfte wirken. Die Tragscheibe läßt sich auf diese Weise vorzugsweise in radialer Richtung mit Langfasern verstärken.

Beim Einlegen von Langfasern in radialer Richtung ist deren Länge nur durch die geometrischen Abmessungen der Reibscheibe beschränkt; in anderer Orientierung durch die Sekantenlänge. Es ist auch möglich, Langfasern in Form von Wellenzügen, Ellipsen oder Kreisen symmetrisch um den Mittelpunkt der Scheibe anzuordnen.

Beim Preßvorgang wird die einen pyrolysierbaren Binder (Harze und/oder Peche) enthaltende Mischung zu einem CFK umgeformt, der erfindungsgemäß bereits endformnah geformt ist. Die Aushärtung des Binders wird mit dem Preßvorgang initiiert und kann während oder nach dem Preßvorgang abgeschlossen werden. Der fertige CFK-Körper wird hierauf pyrolysiert (zu einem porösen CFC-Körper) und kann vor dem Silicieren noch einfach (beispielsweise durch Schleifen) nachbearbeitet werden.

Die sich durch den Preßvorgang ergebenden Formen der Kanäle, Aussparungen und/oder Vertiefungen der Reibzone sind dergestalt, daß eine maßgebliche Vergrößerung der Wärmeübergangsfläche und Vergrößerung der Luftgeschwindigkeit an und in der Reibzone resultiert. Bevorzugt weisen die Kanäle radiale oder tangentiale Hauptachsen auf. Ebenso ist es aber auch möglich Sekanten-, Kreis- oder Spiralförmige Kanäle anzulegen. In diesen letztgenannten Ausgestaltungen sind die einzelnen Kanalelemente vorzugsweise miteinander verbunden. Die Kanäle sind zum Zentrum und/oder zum Umfang der Reibscheibe hin zumindest teilweise offen.

Bei der Tiefe der Ausnehmungen ist darauf zu achten, daß die Luftzirkulation nicht zu weit in die Tragscheibe hineingebracht wird. Daher beträgt die Tiefe der Kanäle, Aussparungen und/oder Vertiefungen üblicherweise 19 % der Scheibendicke oder weniger, bevorzugt maximal 18 %, und besonders bevorzugt maximal ein Sechstel der Scheibendicke. Dabei kann die Tiefe innerhalb einer geometrisch zusammenhängenden Ausnehmung auch variieren. Gute Eigenschaften werden erreicht, wenn die Tiefe der Kanäle (und damit die Dicke der Reibschicht) maximal ein Achtel der Scheibendicke beträgt.

Die Breite der Kanäle, Aussparungen und/oder Vertiefungen liegt üblicherweise beim 0,2- bis 10-fachen ihrer Tiefe, bevorzugt beim 0,5- bis 5-fachen und besonders bevorzugt beim 1- bis 2-fachen.

Die verschiedenen Möglichkeiten der Formen für die Kanäle, Aussparungen und/oder Vertiefungen werden in den Zeichnungen beispielhaft dargestellt. Dabei zeigen
- Fig. 1: eine Draufsicht auf eine ringförmige Reibscheibe mit evolventenförmig gekrümmten Kanälen,
- Fig. 2: eine perspektivische Darstellung einer ringförmigen Reibscheibe mit radialen und kreisförmigen konzentrischen Kanälen,
- Fig. 3: eine perspektivische Darstellung einer ringförmigen Reibscheibe mit einem spiralförmigen Kanal, und
- Fig.: 4 eine perspektivische Darstellung einer ringförmigen Reibscheibe mit einer Vielzahl von evolventenförmig gekrümmten Kanälen, wobei in der rechten Hälfte der Figur die Schicht, die die kanalförmigen Ausnehmungen enthält, von einer zusätzlichen Deckschicht bedeckt ist.

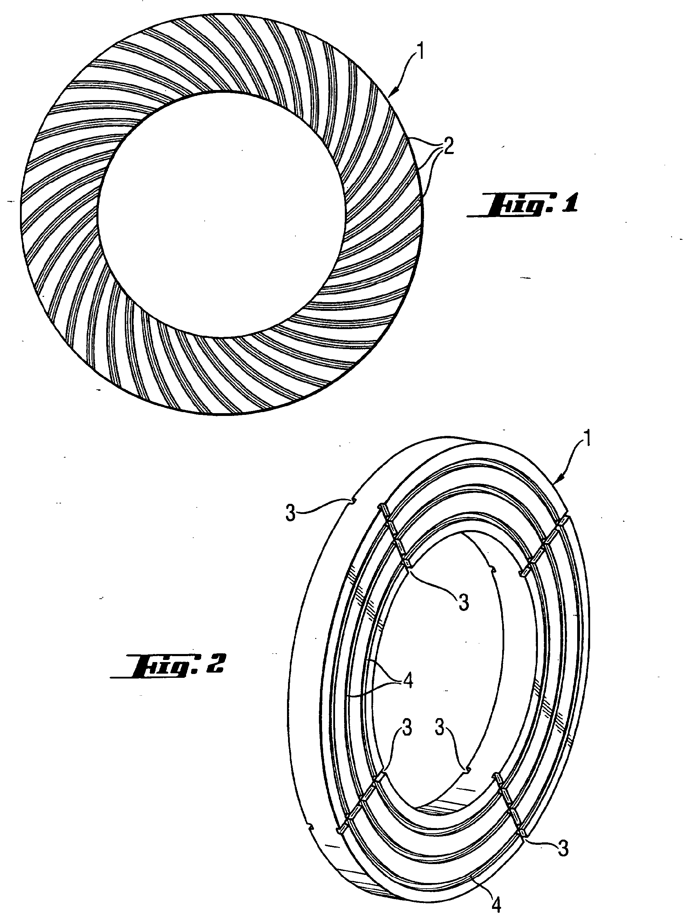

In der in Fig. 1 dargestellten Ausführungsform sind die evolventenförmig gekrümmten Kanäle 2 überall gleich breit. Die höhere Umfangsgeschwindigkeit am Außenrand der ringförmigen Reibscheibe 1 im Vergleich zur Umfangsgeschwindigkeit am inneren Rand des Ringes bewirkt bei Rotation der Scheibe ein Druckgefälle, wodurch die Luft vom Zentrum zur Peripherie gepumpt wird. Dieser Luftstrom bewirkt eine Kühlung der Schicht, in der die Kanäle eingeformt sind. Bei der in dieser Figur dargestellten Krümmung ist die Drehrichtung des Rades bevorzugt in Uhrzeiger-Richtung.

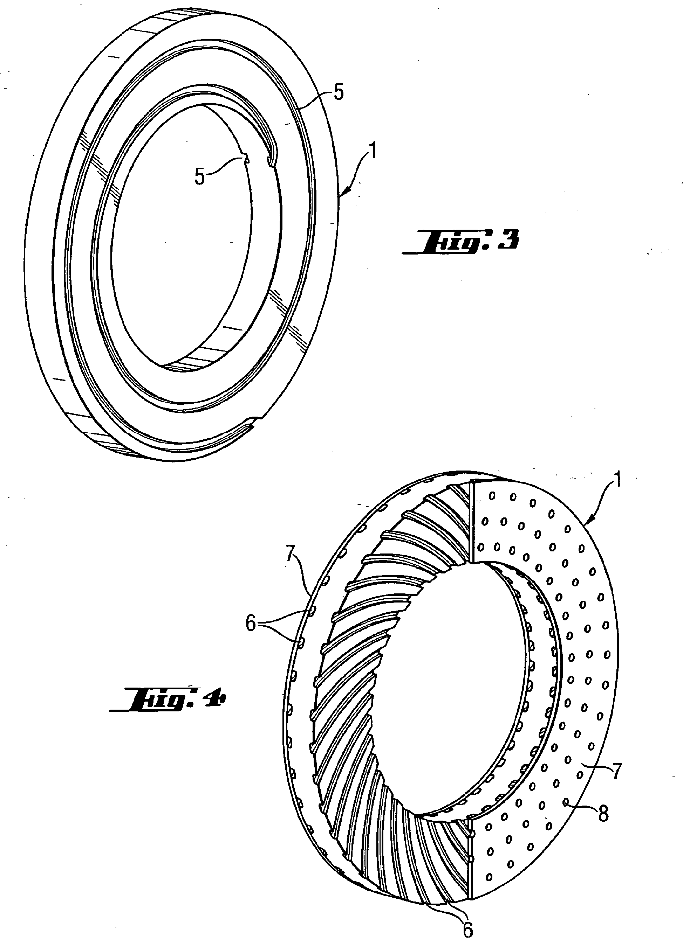

Eine andere Kanalgeometrie zeigt die Fig. 2, wobei radial angeordnete Kanäle 3 mit konzentrisch zum Umfang der Kreisringscheibe 1 laufenden Kanälen 4 kombiniert sind.

In Fig. 3 ist (aus Gründen der Übersichtlichkeit nur) ein einzelner spiralförmiger Kanal 5 in der ringförmigen Reibscheibe 1 dargestellt, selbstverständlich können auch mehrere spiralförmig geformte Kanäle in die Reibschicht eingeformt werden; ebenso ist es möglich, die Zahl der Umläufe zwischen den Öffnungen an der inneren und äußeren Peripherie zu variieren.

Die Fig. 4 zeigt in der linken Bildhälfte die perspektivische Darstellung der ringförmigen Reibscheibe 1, die zu der Draufsicht der Fig. 1 korrespondiert. Hier sind wieder evolventenförmig gekrümmte Kanäle 6 in die Reibschicht eingeformt. In der rechten Hälfte der Figur ist eine andere Ausführungsform dargestellt, bei der über der Schicht mit den kanalförmigen Ausnehmungen, die hier ebenfalls evolventenförmig gekrümmt sind, eine zusätzliche Deckschicht 7 kraftschlüssig aufgebracht, die (wie in dieser Figur gezeigt) Löcher 8 aufweisen kann, die durchweg so angeordnet sind, daß sie an ihrem zur Reibscheibe zeigenden Ende in einem Kanal enden.

Entsprechend der in der rechten Hälfte der Fig. 4 gezeigten Ausführungsform der Erfindung liegen die in der Ringzone B eingebrachten Kanäle, Ausnehmungen und Vertiefungen nicht offen, sondern sind teilweise oder ganz geschlossen. Dabei ist die Tiefe der Ausnehmungen wie oben begrenzt, und die Dicke der Deckschicht beträgt maximal 100 % der Tiefe der Ausnehmungen. In dieser Ausführungsform ist die Reibzone oder Reibschicht (die im Kontakt mit den Reib- bzw. Bremsbelägen ist) nicht die Ringzone B, sondern die sie bedeckende Deckplatte.

Erfindungsgemäß werden die geschlossenen Kanäle, Ausnehmungen und Vertiefungen in der Weise hergestellt, daß auf den durch den Preßvorgang hergestellten CFK- (oder den durch Carbonisierung daraus hergestellten CFC-) Formkörper mit Kanälen, Ausnehmungen und Vertiefungen eine CFK- oder CFC-Platte aufgeklebt oder gefügt (Deckplatte) wird. Die Deckplatte besteht vorteilhafterweise aus einer der Zusammensetzung der Reibschicht entsprechenden Mischung. Da die Ringzone B auch in dieser Ausführungsform im Kontakt mit Luft ist und daher einer oxydativen Schädigung ausgesetzt ist, ist der Werkstoff dafür wie oben auszuwählen. Bei der Technik des Klebens ist darauf zu achten, daß sich alle Vorkörper für Trag- und Reib-Zone sowie der Deckplatte gleichzeitig entweder im CFK- oder im CFC-Zustand befinden. Als Kleber für das Fügen der Reibzone auf die Tragscheibe können Mischungen aus einer der Reib- oder Tragzone artverwandten Zusammensetzung gewählt werden, die zusätzlich Lösungsmittel und weitere organische pyrolysierbare Binder enthalten kann. Nach dem Carbonisierungs- und Silicierungs-Schritt ist die Deckplatte kraftschlüssig mit dem Körper der Reibscheibe verbunden.

In einer weiteren Ausgestaltung der Erfindung (so wie in der rechten Hälfte der Fig. 4 dargestellt) kann die Deckplatte Öffnungen (Löcher) enthalten, derart daß offene Verbindungen zu den untenliegenden Kanälen entstehen können. Gegenüber einem massiven Reibzone wird hierdurch die Luftzirkulation und der Kühleffekt innerhalb der Kanäle erhöht. Ebenso kann das Naß-Ansprechverhalten der Bremsscheibe verbessert werden. Zur Erzeugung der Öffnungen kann nach dem Aufkleben der Deckplatten gebohrt werden, oder es können vorgestanzte mit Öffnungen versehene Deckplatten bei der Montage verwendet werden.

Diese Ausführungsform erlaubt auch das Nachbessern oder Reparieren gebrauchter oder oberflächlich beschädigter Scheiben durch Abschleifen oder anderweitiges Entfernen der verschlissenen oder beschädigten Deckschicht und Verbinden mit einer neuen Deckplatte, wobei diese geklebt oder vorteilhaft in Form eines CFC-Vorkörpers aufgelegt wird und beim Silicierungsschritt mit der Reibscheibe verbunden wird.

Der Übergang von der Reibzone (Ringzone B) zur Tragscheibe A kann definiert werden durch eine Diskontinuität der Faserlänge, des Fasergehaltes oder der Matrixzusammensetzung. Eine solche Diskontinuität entsteht beispielsweise bei der Verfahrensvariante des Klebens durch die Klebeschicht. Für den Fall eines graduellen Übergangs der Materialzusammensetzung, oder falls sich Trag- und Reibzone hinsichtlich der Materialzusammensetzung nicht unterscheiden, ist unter der Reibzone der Oberflächenbereich bis zur Tiefe der Ausnehmungen, Vertiefungen und Bohrungen zu verstehen.

In einer weiteren erfindungsgemäßen Ausgestaltung, die hier nicht dargestellt ist, sind einzelne oder mehrere oder alle sich auf den Reibflächen gegenüberliegenden Kanäle durch Bohrungen durch die Tragscheibe miteinander verbunden. Dabei ist die Zahl und Größe der Bohrungen oder Durchlässe durch die erforderliche mechanische Festigkeit der Tragscheibe limitiert.

Die (ringscheibenförmige) Tragscheibe A ist üblicherweise so ausgestaltet, daß ihr Außenradius gleich dem der Reibzone (Ringzone B oder Deckplatte) oder größer als der der Reibzone ist. Bevorzugt ist der Außenradius der Tragscheibe größer als 50 % des Außenradius der Reibzone, und besonders bevorzugt größer als 80 %. Der Innenradius der Tragscheibe kann kleiner als der der Reibzone sein, dies kann für die Befestigung an einer Glocke, die zur Montage an der Achse dient, von Vorteil sein.

Die erfindungsgemäßen Reibscheiben sind vor allem als Bremsscheiben geeignet, wobei sie hohe Bremsenergien unbeschadet überstehen. Sie lassen sich vorteilhaft ebenfalls beispielsweise als Kupplungsscheiben einsetzen, insbesondere dann, wenn hohe Drehmomente übertragen werden.

### Bezugszeichenliste

- 1: Reibscheibe
- 2: evolventenförmig gekrümmte Kanäle
- 3: radiale Kanäle
- 4: konzentrisch zum Umfang der Reibscheibe angeordnete Kanäle
- 5: spiralförmiger Kanal
- 6: evolventenförmig gekrümmte Kanäle
- 7: Deckschicht
- 8: Löcher in der Deckschicht

## Patentansprüche

1. Reibscheibe umfassend eine zylinderförmige Zone A, die als Tragscheibe kraftschlüssig mit einer Achse zu verbinden ist, und mindestens eine mit einer Deckfläche der Tragscheibe verbundene zylinderförmige Ringzone B, **dadurch gekennzeichnet, daß** die der Tragscheibe abgewandte Seite der Ringzone B Ausnehmungen aufweist, die eine Zwangsumluftkühlung bewirken, wobei die Ausnehmungen in der Ringzone B radial-trapezförmige, evolventenförmig gekrümmte, ellipsenförmige, kreisförmige oder polygonale Gestalt haben und zum Umfang oder zum Zentrum hin offen sind, und daß das Material der Tragscheibe A eine faserverstärkte Keramik ist, die aus einem Teil im Grünzustand vor der Keramisierung geformt ist, und daß das Material der Ringzone B ein keramisches Material ist, wobei das keramische Material der Ringzone B und das Material der Matrix der faserverstärkten Keramik der Tragscheibe A unabhängig voneinander ausgewählt sind aus Silicium, Siliciumcarbid, Siliciumnitrid, Kohlenstoff, Bornitrid, Borcarbid, Si/B/N/C und deren Mischungen.

2. Reibscheibe nach Anspruch 1, **dadurch gekennzeichnet, daß** die Dicke der Ringzone B 19 % der Dicke der Reibscheibe oder weniger beträgt.

3. Reibscheibe nach Anspruch 1, **dadurch gekennzeichnet, daß** die Ringzone B als Reibschicht ausgebildet ist, wobei die Ringzone B und die Matrix der Tragscheibe A aus demselben Werkstoff bestehen.

4. Reibscheibe nach Anspruch 1, **dadurch gekennzeichnet, daß** die Ringzone B als Reibschicht ausgebildet ist, wobei die Ringzone B und die Tragscheibe A aus demselben Werkstoff bestehen.

5. Reibscheibe nach Anspruch 1, **dadurch gekennzeichnet, daß** als Verstärkungsfasern eine oder mehrere Faserarten eingesetzt sind, ausgewählt aus Carbonfasern, Graphitfasern, Siliciumcarbidfasern, Bornitridfasern, Aluminiumoxidfasern, Si/B/N/C- und Siliciumdioxidfasern.

6. Reibscheibe nach Anspruch 1, **dadurch gekennzeichnet, daß** die Ausnehmungen in der Ringzone B Kanäle (2, 3, 4, 5, 6) sind, die zum Zentrum und/oder zum Umfang der Reibscheibe (1) hin zumindest teilweise offen sind.

7. Reibscheibe nach Anspruch 1, **dadurch gekennzeichnet, daß** die Ringzone B von einer Deckschicht (7) bedeckt ist, die gegebenenfalls Aussparungen oder Löcher (8) aufweist.

8. Reibscheibe nach Anspruch 7, **dadurch gekennzeichnet, daß** die Deckschicht (7) Löcher (8) aufweist, die die in der Ringzone B zwischen der Deckschicht und der Tragscheibe A durch die Ausnehmungen gebildeten Hohlräume zugänglich machen.

9. Reibscheibe nach Anspruch 1, **dadurch gekennzeichnet, daß** der Volumenanteil an Verstärkungsfasern im Werkstoff der Tragscheibe A und im Werkstoff der Ringzone B 0 bis 80 % beträgt, und daß der Volumenanteil an Verstärkungsfasern im Werkstoff der Tragscheibe A mindestens das 1,01-fache des Volumenanteils an Verstärkungsfasern in der Ringzone B beträgt.

10. Reibscheibe nach Anspruch 1, **dadurch gekennzeichnet, daß** die Faserbündeldicke in der Tragscheibe A um mindestens 1 % größer ist als die in der Ringzone B.

11. Verfahren zur Herstellung einer Reibeinheit nach Anspruch 1, **dadurch gekennzeichnet, daß** eine Preßform mit Mischungen aus Verstärkungsfasern und keramischen Massen gefüllt wird, wobei die Zusammensetzung der Mischungen so variiert wird, daß die Mischung für die Ringzone B einen Volumenanteil von 0 bis 80 % an Verstärkungsfasern aufweist, und die Tragscheibe A einen Volumenanteil an Verstärkungsfasern aufweist, der mindestens das 1,01-fache des Volumenanteils für die Ringzone B beträgt, die Masse durch Pressen verformt wird in eine Gestalt, die ungefähr der gewünschten Gestalt der Reibscheibe aufweist, der Formling gebrannt und anschließend durch Infiltration mit flüssigem Silicium und Reaktion des Siliciums mit dem Material der Matrix zumindest teilweise zu Siliciumcarbid umgesetzt wird.

12. Verwendung von Reibscheiben nach einem oder mehreren der Ansprüche 1 bis 10 in Bremsen für Fahrzeuge.

## Claims

1. A friction disk comprising a cylindrical zone A, which is intended to be connected non-interlockingly with a shaft as a supporting disk, and at least one cylindrical annular zone B connected with an outer face of the supporting disk, **characterised in that** the side of the annular zone B remote from the supporting disk comprises recesses which effect air cooling by forced circulation, wherein the recesses in the annular zone B are radial-trapezoidal, involutely curved, elliptical, circular or polygonal in shape and are open towards the periphery or the centre, and **in that** the material of the supporting disk A is a fibre-reinforced ceramic, which is shaped from a single piece in the green state prior to ceramisation, and **in that** the material of the annular zone B is a ceramic material, wherein the ceramic material of the annular zone B and the material of the matrix of the fibre-reinforced ceramic of the supporting disk A are selected independently of one another from silicon, silicon carbide, silicon nitride, carbon, boron nitride, boron carbide, Si/B/N/C and mixtures thereof.

2. A friction disk according to claim 1, **characterised in that** the thickness of the annular zone B amounts to 19 % of the thickness of the friction disk or less.

3. A friction disk according to claim 1, **characterised in that** the annular zone B takes the form of a friction layer, wherein the annular zone B and the matrix of the supporting disk A consist of the same material.

4. A friction disk according to claim 1, **characterised in that** the annular zone B takes the form of a friction layer, wherein the annular zone B and the supporting disk A consist of the same material.

5. A friction disk according to claim 1, **characterised in that** one or more types of fibre are used as reinforcing fibres, selected from carbon fibres, graphite fibres, silicon carbide fibres, boron nitride fibres, aluminium oxide fibres, Si/B/N/C and silicon dioxide fibres.

6. A friction disk according to claim 1, **characterised in that** the recesses in the annular zone B are channels (2, 3, 4, 5, 6), which are at least partially open towards the centre and/or the periphery of the friction disk (1).

7. A friction disk according to claim 1, **characterised in that** the annular zone B is covered by an outer layer (7), which optionally comprises recesses or holes (8).

8. A friction disk according to claim 7, **characterised in that** the outer layer (7) comprises holes (8), which allow access to the cavities formed by the recesses in the annular zone B between the outer layer and the supporting disk A.

9. A friction disk according to claim 1, **characterised in that** the volume fraction of reinforcing fibres in the material of the supporting disk A and in the material of the annular zone B amounts to from 0 to 80 %, and **in that** the volume fraction of reinforcing fibres in the material of the supporting disk A amounts to at least 1.01 times the volume fraction of reinforcing fibres in the annular zone B.

10. A friction disk according to claim 1, **characterised in that** the fibre bundle thickness in the supporting disk A is at least 1 % greater than that in the annular zone B.

11. A method of producing a friction unit according to claim 1, **characterised in that** a mould is filled with mixtures of reinforcing fibres and ceramic compositions, wherein the composition of the mixtures is varied in such a way that the mixture for the annular zone B has a volume fraction of from 0 to 80 % of reinforcing fibres, and the supporting disk A has a volume fraction of reinforcing fibres which amounts to at least 1.01 times the volume fraction for the annular zone B, the composition is moulded by compression into a shape which is approximately the same shape as that desired for the friction disk, the shaped body is fired and then converted at least in part into silicon carbide by infiltration with liquid silicon and reaction of the silicon with the material of the matrix.

12. Use of friction disks according to one or more of claims 1 to 10 in brakes for vehicles.

## Revendications

1. Disque de friction comprenant une zone cylindrique A devant être reliée par friction à un axe, en tant que disque de support, et au moins une zone annulaire cylindrique B reliée à une surface de couverture du disque de support,
**caractérisé en ce que** la face de la zone annulaire B, qui est éloignée du disque de support, comporte des évidements qui produisent un refroidissement forcé à circulation d'air, les évidements ménagés dans la zone annulaire B ayant une forme radiale trapézoïdale, courbe à développante, ellipsoïde, circulaire ou polygonale, et étant ouverts vers la périphérie ou vers le centre, et **en ce que** la matière du disque de support A est une matière céramique armée de fibres façonnée d'une seule pièce à l'état vert, avant la cuisson, et que la matière de la zone annulaire B est une matière céramique, la matière céramique de la zone annulaire B et la matière de la matrice de la céramique armée de fibres constituant le disque de support A étant choisies de manière indépendante l'une de l'autre parmi les silicium, carbure de silicium, nitrure de silicium, carbone, bore nitruré, carbure de bore, Si/B/N/C, et des mélanges de ceux-ci.

2. Disque de friction selon la revendication 1,
**caractérisé en ce que** l'épaisseur de la zone annulaire B représente 19% de l'épaisseur du disque de friction, ou moins.

3. Disque de friction selon la revendication 1,
**caractérisé en ce que** la zone annulaire B est réalisée sous forme d'une garniture de friction, la zone annulaire B et la matrice du disque de support A étant faites de la même matière.

4. Disque de friction selon la revendication 1,
**caractérisé en ce que** la zone annulaire B est réalisée sous forme d'une garniture de friction, la zone annulaire B et le disque de support A étant faits de la même matière.

5. Disque de friction selon la revendication 1,
**caractérisé en ce que**, pour constituer les fibres d'armement, on utilise une ou plusieurs sortes de fibres choisie(s) parmi les fibres de carbone, fibres de graphite, fibres de carbure de silicium, fibres de nitrure de bore, fibres d'oxyde d'aluminium, et fibres Si/B/N/C et de dioxyde de silicium.

6. Disque de friction selon la revendication 1,
**caractérisé en ce que** les évidements ménagés dans la zone annulaire B sont des canaux (2, 3, 4, 5, 6) qui sont au moins partiellement ouverts vers le centre et/ou vers la périphérie du disque de friction (1).

7. Disque de friction selon la revendication 1,
**caractérisé en ce que** la zone annulaire B est recouverte par une couche de couverture (7) qui comporte, le cas échéant, des évidements ou des trous (8).

8. Disque de friction selon la revendication 7,
**caractérisé en ce que** la couche de couverture (7) comporte des trous (8) qui donnent accès aux cavités formées par les évidements dans la zone annulaire B, entre la couche de couverture et le disque de support A.

9. Disque de friction selon la revendication 1,
**caractérisé en ce que** la part volumique de fibres d'armement dans la matière du disque de support A et dans la matière de la zone annulaire B est de 0 à 80 %, et que la part volumique de fibres d'armement dans la matière du disque de support A est égale à au moins 1,01 fois la part volumique de fibres d'armement de la zone annulaire B.

10. Disque de friction selon la revendication 1,
**caractérisé en ce que** l'épaisseur des faisceaux de fibres dans le disque de support A est d'au moins 1 % supérieure à celle de la zone annulaire B.

11. Procédé de fabrication d'un ensemble de friction selon la revendication 1, **caractérisé en ce qu'**un moule de compression est rempli de mélanges de fibres d'armement et de masses céramiques, la composition des mélanges étant variée de manière telle que le mélange prévu pour la zone annulaire B présente une part volumique de fibres d'armement de 0 à 80 %, et que le disque de support A présente une part volumique de fibres d'armement qui représente au moins 1,01 fois la part volumique de la zone annulaire B, **en ce que** la masse est formée par compression pour adopter une forme qui est à peu près celle de la forme souhaitée du disque de friction, que l'ébauche ainsi formée est cuite, et qu'ensuite, elle est transformée au moins partiellement en carbure de silicium par infiltration de silicium liquide et par réaction du silicium avec la matière de la matrice.

12. Utilisation de disques de friction selon l'une des revendications 1 à 10 dans des freins pour véhicules.
